Europäisches Patentamt

European Patent Office

Office européen des brevets

(19)

(11) **EP 1 106 662 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(51) Int Cl.⁷: **C09D 183/07**, C08L 83/07, C08K 5/5435

(21) Anmeldenummer: **00120282.9**

(22) Anmeldetag: **28.09.2000**

(54) **Selbsthaftende additionsvernetzende Siliconelastomerzusammensetzungen**

Self-adhesive addition curable silicone elastomer compositions

Compositions d'élastomères de silicone auto-adhésives réticulantes par addition

(84) Benannte Vertragsstaaten:
**BE DE FR GB IT NL**

(30) Priorität: **09.12.1999 DE 19959412**

(43) Veröffentlichungstag der Anmeldung:
**13.06.2001 Patentblatt 2001/24**

(73) Patentinhaber: **Wacker-Chemie GmbH**
**81737 München (DE)**

(72) Erfinder:
 • **Müller, Philipp, Dr.**
  **84489 Burghausen (DE)**
 • **Achenbach, Frank, Dr.**
  **84359 Simbach (DE)**

 • **Eberl, Georg**
  **84489 Burghausen (DE)**

(74) Vertreter: **Fritz, Helmut, Dr. et al**
  **Wacker-Chemie GmbH,**
  **Zentralabteilung Patente,**
  **Marken und Lizenzen,**
  **Hanns-Seidel-Platz 4**
  **81737 München (DE)**

(56) Entgegenhaltungen:
 **EP-A- 0 245 948      EP-A- 0 350 951**
 **EP-A- 0 497 349      EP-A- 0 543 401**
 **EP-A- 0 875 536      DE-A- 3 939 176**
 **US-A- 5 364 921**

## Beschreibung

Die Erfindung betrifft selbsthaftende additionsvernetzende Siliconzusammensetzungen sowie daraus hergestellte additionsvernetzte Siliconelastomere und Verbundmaterialien.

Bekanntermaßen ist die Haftung additionsvernetzter Siliconelastomere auf zahlreichen Substraten, wie Kunststoffen, Metallen und Gläsern, gering, d.h., wird eine additionsvernetzende Siliconelastomermasse auf ein Substrat aufgebracht und anschließend vernetzt, kann das entstandene Siliconelastomer in der Regel problemlos, d.h. durch Anwendung geringer Zugkräfte, von der Substratoberfläche abgezogen werden; häufig wird sogar eine spontane Ablösung des Siliconelastomers vom Substrat festgestellt. Da in zahlreichen Anwendungen jedoch eine feste und dauerhafte Substrathaftung des Siliconelastomers von entscheidender Bedeutung ist, wurde eine Vielzahl spezieller Maßnahmen vorgeschlagen, um eine feste Verbindung zwischen Substrat und Siliconelastomer zu erzielen.

Grundsätzlich kann die Haftfestigkeit des Siliconelastomer-Substrat-Verbundes erhöht werden, indem die chemische und/oder physikalische Beschaffenheit des Substrates bzw. der Substratoberfläche vor dem Aufbringen der additionsvernetzenden Siliconelastomerzusammensetzung in geeigneter Weise verändert wird. Dies kann beispielsweise erfolgen durch Vorbehandlung der Substratoberfläche mit haftvermittelnden Additiven (sogenannten Primern), durch Plasmabehandlung der Substratoberfläche, durch Einmischen spezieller Zusätze in das Substrat, durch gezielte Einstellung der Morphologie des Substrates, durch Erhöhung der Oberflächenrauhigkeit etc. Diese Maßnahmen haben u.a. den Nachteil, dass zusätzliche Verfahrensschritte erforderlich werden oder spezielle Anforderungen an die Beschaffenheit des Substrates gestellt werden müssen.

Des weiteren kann die Haftfestigkeit des Siliconelastomer-Substrat-Verbundes erhöht werden, indem die chemische und/oder physikalische Beschaffenheit der additionsvernetzenden Siliconelastomermasse gezielt verändert wird. Bekannt sind zahlreiche haftvermittelnde Additive, welche - der unvernetzten Siliconmasse beigemischt - eine Selbsthaftung des resultierenden Siliconelastomers auf diversen Substraten herbeiführen. Hierzu zählen Verbindungen, die hochreaktive funktionelle Gruppen, wie Alkoxy, Epoxy, Carboxy, Amino etc., enthalten, wobei diese Gruppen zumeist so ausgewählt werden, dass der Haftvermittler sowohl mit dem Substrat als auch mit einem Siliconelastomerbestandteil zu reagieren vermag. Zwar kann durch derartige Haftvermittler auf eine Vorbehandlung des Substrates evtl. verzichtet werden, doch entspricht die erzielte Haftfestigkeit häufig nicht den gestellten Anforderungen. Auch ist eine Steigerung der Haftfestigkeit durch höhere Gehalte an diesen Haftvermittlern nur bedingt möglich, da sich die in ihm enthaltenen hochreaktiven Gruppen dann zunehmend nachteilig auf die Gebrauchseigenschaften, wie Lagerstabilität, Vernetzungscharakteristik (Inhibierung), toxikologische Unbedenklichkeit etc., auswirken; man ist aus diesen Gründen vielmehr daran interessiert, den Gehalt an Haftvermittlern so niedrig wie möglich zu halten.

EP-A-686 671 beschreibt eine selbsthaftende additionsvernetzende Masse, die ohne speziellen Haftvermittler auskommt, da der haftvermittelnde Bestandteil entweder ein Organohydrogenpolysiloxan ist, welches durchschnittlich pro Molekül mindestens zwei SiH-Gruppen besitzt und dessen monovalente Si-gebundene Reste zu mindestens 12 Mol.-% aus Kohlenwasserstoffresten mit einem aromatischen Ring bestehen, oder eine solche Verbindung ist, die durchschnittlich pro Molekül mindestens eine SiH-Gruppe besitzt und die eine Gruppe bestehend aus zwei aromatischen Ringen enthält, wobei die beiden aromatischen Ringe durch $-R^{13}R^{14}Si-$, $-R^{13}R^{14}SiO-$, $-OR^{13}R^{14}SiO-$ oder $-R^{13}R^{14}SiOR^{13}R^{14}Si-$ voneinander getrennt sind und die Reste $R^{13}$ und $R^{14}$ einwertige Kohlenwasserstoffreste darstellen. Der haftvermittelnde Bestandteil kann also zugleich der Vernetzer der Siliconelastomermasse sein. Mit dieser Zusammensetzung wird eine gute Haftung auf organischen Kunststoffen (vor allem ABS) erzielt, während gleichzeitig auf eine leichte Entformbarkeit aus der metallenen Vulkanisationsform (Chrom- oder Nickel-beschichtete Stahlform bzw. Form aus einer Aluminiumlegierung) hingewiesen wird. Der hohe Gehalt an aromatische Ringe enthaltenden Resten in dem SiH-haltigen, haftvermittelnden Bestandteil von > 12 Mol.-% bedingt jedoch eine erhebliche Unverträglichkeit mit den übrigen Bestandteilen der additionsvernetzenden Siliconelastomermasse. Dies führt einerseits zu einer teilweisen Entmischung (Ausschwitzen) während der Lagerung, was ein wiederholtes Homogenisieren der diesen Bestandteil enthaltenden Komponente vor Gebrauch erforderlich macht. Diese Unverträglichkeit, die sich bereits an einer milchigen Trübung der unvernetzten Masse zeigt, manifestiert sich auch in einer deutlich verminderten Transparenz der daraus hergestellten Siliconelastomerteile. Fungiert der haftvermittelnde Bestandteil zugleich als Vernetzer der Siliconelastomerzusammensetzung, führt die Unverträglichkeit zu Vulkanisationsstörungen, die zu inhomogener Netzwerkbildung und mangelhaften mechanischen Vulkanisateigenschaften führen. Um diese Vulkanisationsstörungen zu umgehen, muß zusätzlich zum haftvermittelnden SiH-haltigen Bestandteil ein mit der Siliconelastomermasse vollständig verträglicher SiH-haltiger Vernetzer eingesetzt werden, was allerdings andere Nachteile (z.B. erhöhte Werte des Druckverformungsrestes; erhöhte Ausschwitztendenz des haftvermittelnden Bestandteils) zur Folge hat. Der hohe Gehalt an aromatische Ringe enthaltenden Resten in dem SiH-haltigen, haftvermittelnden Bestandteil von > 12 Mol.-% verursacht auch eine erhebliche Strukturviskosität und Thixotropie der Siliconelastomermasse, die in zahlreichen Anwendungen (z.B. Spritzguß von Flüssigsiliconkautschuk) unerwünscht ist. Schließlich ist auch die Haftung dieser Zusammensetzung auf Metallen unzureichend.

EP-A-875 536 beschreibt eine selbsthaftende additionsvernetzende Siliconkautschukmischung, die sich dadurch auszeichnet, dass

a) der SiH-Vernetzer mindestens 20 SiH-Gruppen enthält (übrige Reste sind aliphatisch gesättigt),
b) ein epoxfunktionelles Alkoxysilan und/oder Alkoxysiloxan enthalten ist,
c) optional ein Peroxid.

Besonders bevorzugt ist dabei die Verwendung des Glycidyloxypropyltrimethoxysilans (Glymo). Die in EP-A-875 536 beschriebene Siliconkautschukmischung eignet sich besonders zur Herstellung von Verbundformteilen, die aus dem Siliconelastomer und einem organischen Kunststoff bestehen. Die in EP-A-875 536 beschriebene Zusammensetzung weist jedoch den Nachteil auf, dass nur bei Verwendung sehr SiH-reicher Vernetzer, mit durchschnittlich mindestens 20 SiH-Gruppen pro Molekül, eine ausreichende Haftfestigkeit erzielt werden kann. In den dortigen Beispielen werden Vernetzer mit 30 SiH-Gruppen je Molekül verwendet. Die Verwendung derart hochfunktioneller Vernetzer vermindert die Lagerstabilität additionsvernetzender Siliconkautschukmischungen erheblich, d.h. die Fließfähigkeit wird massiv beeinträchtigt, was bis zur Verstrammung der Masse führen kann, wodurch eine ordnungsgemäße Verarbeitung der Masse, z.B. im Spritzguß, nicht mehr möglich ist. Zudem müssen, um eine hohe Haftfestigkeit zu erzielen, relativ hohe Mengen an epoxyfunktionellem Alkoxysilan/-siloxan eingesetzt werden, wodurch die Vernetzungsgeschwindigkeit erheblich vermindert wird. Zwar kann dies teilweise durch Verwendung eines Peroxids, wie in EP-A-875 536 beschrieben, kompensiert werden, doch kommen hierfür wegen der notwendigerweise niedrigen Vernetzungstemperatur (Erweichung des organischen Kunststoffes) nur Peroxide mit niedriger Anspringtemperatur, wie das beschriebene 2,4-Dichlorbenzoylperoxid, in Frage, die zum einen wegen der freigesetzten Spalt- und Folgeprodukte toxikologisch sehr bedenklich sind (PCB-Problematik), zum anderen die Lagerstabilität der Masse weiter verschlechtern.

EP-A-543 401, US-A-5364921, EP-A-245 948, EP-A-350 951, EP-A-497 349 und DE-A-3939176 beschreiben additionsvernetzende Siliconzusammensetzungen, die ungesättigtes Siloxan, Hydrogensiloxan, epoxyfunktionelle siliciumorganische Verbindung und Platinkatalysator umfassen. EP-A-543 401 und DE-A-3939176 beschreiben Organohydrogensiloxane, welche Gruppen enthalten, die die Verträglichkeit mit den übrigen Bestandteilen der Masse herabsetzen.

Zusammenfassend kann festgestellt werden, daß keine der herkömmlichen additionsvernetzenden Siliconelastomerzusammensetzungen in befriedigender Weise den Anforderungen gerecht wird, die an eine selbsthaftende Siliconelastomermasse, welche insbesondere zur Herstellung von Verbundformteilen oder zum Verguß elektrischer/ elektronischer Teile Verwendung finden soll, gestellt werden, nämlich:

a) gute Fließfähigkeit und Lagerstabilität
b) hohe Vernetzungsgeschwindigkeit bei relativ niedrigen Temperaturen
c) hohe Haftfestigkeit auf organischen Kunststoffen, Metallen und Gläsern
d) leichte Entformbarkeit aus Vulkanisationsformen
e) toxikologische Unbedenklichkeit
f) hohes Niveau der Gebrauchseigenschaften (Transparenz, Nichtkorrosivität, mechanisches Eigenschaftsprofil)

Es bestand daher die Aufgabe, eine auf organischen Kunststoffen, Metallen und Gläsern gut selbsthaftende additionsvernetzende Siliconelastomermasse bereitzustellen, die obige Nachteile nicht aufweist bzw. dem voranstehenden Anforderungsprofil gerecht wird.

Gegenstand der Erfindung sind selbsthaftende additionsvernetzende Siliconzusammensetzungen, die

(A) Diorganopolysiloxane der allgemeinen Formel (1)

$$R^1_a R^2_b SiO_{(4-a-b)/2} \tag{1},$$

in der

$R^1$ Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,

$R^2$ einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,

b Werte von 0,003 bis 2 bedeuten,

mit der Maßgabe, dass 1.5<(**a+b**)<3.0, dass pro Molekül durchschnittlich mindestens zwei aliphatisch ungesättigte Reste **R²** enthalten sind und dass die bei 25°C bestimmte Viskosität der Diorganopolysiloxane (A) 1 mPa.s bis 40 000 Pa.s beträgt,

(B) Organohydrogenpolysiloxane der allgemeinen Formel (2)

$$R^3{}_cR^4{}_dR^5{}_eH_fSiO_{(4-c-d-2e-f)/2} \qquad (2),$$

wobei

| | |
|---|---|
| **R³** | einen monovalenten aliphatisch gesättigten Kohlenwasserstoffrest mit 1 bis 20 Kohlenstoffatomen, |
| **R⁴** | (a) einen gegebenenfalls halogensubstituierten monovalenten Kohlenwasserstoffrest mit 6 bis 15 Kohlenstoffatomen, welcher mindestens einen aromatischen $C_6$-Ring enthält, oder (b) einen halogensubstituierten, gegebenenfalls O-, N-, S-, oder P-Atome enthaltenden gesättigten monovalenten Kohlenwasserstoffrest mit 2 bis 20 Kohlenstoffatomen, |
| **R⁵** | einen beidseitig Si-gebundenen bivalenten, gegebenenfalls halogensubstituierten, gegebenenfalls O-, N-, S-, oder P-Atome enthaltenden Kohlenwasserstoffrest mit 6 bis 20 Kohlenstoffatomen und |
| **c, d, e** und **f** | positive Zahlen bedeuten, mit der Maßgabe, dass das Organohydrogenpolysiloxan (B) pro Molekül durchschnittlich 3 bis weniger als 20 SiH-Gruppen enthält, dass die Relationen: 0,05<100 (d+e) / (c+d+e+f) <12 erfüllt sind und dass die bei 25°C bestimmte Viskosität des Organohydrogenpolysiloxans (B) 1 mPa.s bis 100 Pa.s beträgt, |

(C) Epoxygruppen und hydrolysierbare Gruppen aufweisende Organosiliciumverbindungen der allgemeinen Formel (3)

$$R^7{}_gR^8{}_hR^9{}_iSiO_{(4-g-h-i)/2} \qquad (3),$$

und/oder deren Teilhydrolysate, wobei

| | |
|---|---|
| **R⁷** | einen Wasserstoff-, Hydroxyl- oder einen gegebenenfalls halogen- oder cyanosubstituierten, gegebenenfalls O-, N-, S-, oder P-Atome enthaltenden gesättigten monovalenten Kohlenwasserstoffrest mit 1 bis 20 Kohlenstoffatomen, |
| **R⁸** | einen mindestens eine Epoxygruppe, gegebenenfalls halogensubstituierte, gegebenenfalls O-, N-, S-, oder P- Atome enthaltenden monovalenten Kohlenwasserstoffrest mit 2 bis 20 Kohlenstoffatomen, |
| **R⁹** | einen über eine Si-O-C-, Si-O-N- oder Si-N-Verknüpfung an Si gebundenen hydrolysierbaren monovalenten gegebenenfalls halogensubstituierten, gegebenenfalls O-, N-, S-, oder P-Atome enthaltenden Kohlenwasserstoffrest mit 1 bis 20 Kohlenstoffatomen, |

mit der Maßgabe, dass gilt, 4>**g**≥0, 4>**h**>0, 4>**i**>0, 4≥(**h+i**)>0 und 4≥(**g+h+i**), und

(D) Hydrosilylierungskatalysator enthalten.

Organohydrogenpolysiloxan (B) fungiert als Haftvermittler und zugleich als Vernetzer.

Die vorteilhaften Eigenschaften der Siliconzusammensetzungen bestehen darin, dass die Selbsthaftung durch einen ohnehin in jeder additionsvernetzenden Masse enthaltenen Bestandteil, nämlich den SiH-haltigen Vernetzer (B), in Kombination mit der epoxyfunktionelle und hydrolysierbare Reste aufweisenden Organosiliciumverbindung (C), erzielt wird, wobei der SiH-Vernetzer (B) lediglich einige Gruppen enthalten muß, welche die Verträglichkeit mit den übrigen Bestandteilen der Masse (vor allem mit dem Diorganopolysiloxan) herabsetzen. Diese Gruppen stellen zudem keine reaktiven funktionellen Gruppen dar, sondern sind vorzugsweise Phenylgruppen, wodurch die toxikologische Unbedenklichkeit der Masse (z.B. Trinkwasserzulassung; BGA/FDA-Zulassung) bewahrt bleibt, keine Vulkanisationsstörungen auftreten, ausreichende Lagerstabilität gegeben ist, die Transparenz des vernetzten Siliconelastomers bewahrt bleibt und keine ausschwitzenden oder extrahierbaren Bestandteile zugesetzt werden. Die Kombination des vermindert verträglichen SiH-Vernetzers (B) mit einer epoxyfunktionelle und hydrolysierbare Reste aufweisenden Organosiliciumverbindung (C) macht es möglich, erstens, den Gehalt an unverträglichen Gruppen im SiH-Vernetzer niedrig zu halten und zweitens, die haftvermittelnde Wirksamkeit der epoxyfunktionelle und hydrolysierbare Reste aufweisenden Organosiliciumverbindung (C) auch bei relativ niedriger SiH-Funktionalität des SiH-Vernetzers zu erzielen. Erst die Kombination beider Bestandteile (B) und (C)führt zur Synergie der Selbsthaftungseffekte dieser beiden Bestandteile.

Insbesondere zeichnet sich die vorliegende Zusammensetzung dadurch aus, dass

a) die Vernetzungsgeschwindigkeit kaum vermindert wird,

b) die Transparenz der vernetzten Siliconelastomere nicht beeinträchtigt wird,

c) keine nachteiligen Veränderungen der mechanischen Elastomereigenschaften in Kauf genommen werden müssen,

d) der haftvermittelnde Bestandteil (B) zugleich als Vernetzer fungiert (kein zusätzlicher SiH-Vernetzer erforderlich),

e) auch auf Metallen eine starke Selbsthaftung erzielt werden kann, ohne die Entformbarkeit aus metallenen Vulkanisationsformen zu verhindern (es zeigt sich, dass die Haftung auf Metall kurz nach der Vernetzung eine Entformung des Siliconelastomerteiles erlaubt; wird der Siliconelastomer-Metall-Haftverbund jedoch gelagert, wächst das Siliconelastomer innerhalb kurzer Zeit fest und dauerhaft auf die Metalloberfläche auf),

f) die Fließfähigkeit der unvernetzten Masse kaum beeinträchtigt wird.

Der haftvermittelnde Bestandteil (B) der vorliegenden Erfindung weist zwar auch eine verminderte Verträglichkeit mit den übrigen Bestandteilen der Masse auf, was an einer Trübung beim Einmischen erkennbar ist, doch verschwindet diese Trübung vollständig, sobald die Masse zum Zwecke der Vernetzung erwärmt wird; dies indiziert eine homogene Verteilung der Vernetzermoleküle in der Masse zum Zeitpunkt der Vernetzung.

Wenn der haftvermittelnde SiH-haltige Bestandteil (B) in mindestens 12 Mol.-% der Reste Phenylgruppen enthält, bleibt hingegen diese Trübung auch bei üblichen Vernetzungstemperaturen bestehen und indiziert eine inhomogene Netzwerkbildung, was anhand der optischen Eigenschaften, der Vernetzungscharakteristik und der mechanischen Eigenschaften auch belegt werden kann.

Die Komponenten (A), (B) und (C) können eine Verbindung oder eine Mischung verschiedener Verbindungen enthalten.

Beispiele für die Reste $R^1$ sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest.

Bevorzugte Reste $R^1$ enthalten 1 bis 10 Kohlenstoffatome sowie gegebenenfalls Halogensubstituenten. Besonders bevorzugte Reste $R^1$ sind Methyl-, Phenyl- und 3,3,3-Trifluorpropylrest, insbesondere der Methylrest.

Die Reste $R^2$ sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und

Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste $R^2$ sind Vinyl-, Allyl- und 5-Hexenylrest, insbesondere der Vinylrest.

Bei den Diorganopolysiloxanen (A) der allgemeinen Formel (1) beträgt die bei 25°C bestimmte Viskosität zwischen vorzugsweise 100 mPa.s bis 30 000 Pa.s. Besonders bevorzugt ist der Viskositätsbereich von 1 bis 30 000 Pa.s. Je nach Art der additionsvernetzenden Masse, werden unterschiedliche Viskositätsbereiche besonders bevorzugt. Für die als RTV-2 (room temperature vulcanizing) bekannten Massen werden Viskositäten von 100 bis 10 000 mPa.s besonders bevorzugt, für LSR (liquid silicone rubber) von 1 bis 100 Pa.s, für HTV (high temperature vulcanizing) von 2 000 bis 40 000 Pa.s.

Beispiele für $R^3$ sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Bevorzugte Reste $R^3$ sind Kohlenwasserstoffreste mit 1 bis 10 Kohlenstoffatomen. Besonders bevorzugter Rest $R^3$ ist der Methylrest.

Beispiele für $R^4$ (a) sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest.

Beispiele für Kohlenwasserstoffreste $R^4$ (b) mit 2 bis 20 Kohlenstoffatomen sind 3-Chlorpropyl-, 3-Brompropyl-, 3,3,3-Trifluorpropyl-, 2-Fluorethyl-, 1,1-Dihydroperfluordodecyloder der 2-Cyanoethylrest.

Besonders bevorzugte Reste $R^4$ sind der Phenylrest und der 3,3,3-Trifluorpropylrest.

Bevorzugte Reste $R^5$ entsprechen der allgemeinen Formel (4)

$$-(O)_s-(R^6)_t-(O)_u-(X)_w-(O)_u-(R^6)_t-(O)_s-, \tag{4}$$

wobei

| | |
|---|---|
| **s, t, u** und **w** | unabhängig voneinander die Werte 0, 1 oder 2, |
| $R^6$ | gleich oder verschieden sein können und einen bivalenten, gegebenenfalls halogensubstituierten, gegebenenfalls O-, N-, S-, oder P-Atome enthaltenden Kohlenwasserstoffrest, der frei ist von aliphatisch ungesättigten Gruppen und 1 bis 10 Kohlenstoffatome enthält, wie $-CH_2-$, $-CH_2-CH_2-$, $-CH_2-CH_2-CF_2-$, $-CF_2-$, $-CH_2-CF_2-$, $-CH_2-CH(CH_3)-$, $-C(CH_3)_2-$, $-CH_2-C(CH_3)_2-$, $-C(CH_3)_2-CH_2-$, $-CH_2-CH_2-O-$ oder $-CF_2-CF_2-O-$, |
| **- (X)-** | einen bivalenten Rest, welcher ausgewählt wird aus $-Ph-$, $-Ph-O-Ph-$, $-Ph-S-Ph-$, $-Ph-SO_2-Ph-$, $-Ph-C(CH_3)_2-Ph-$, $-Ph-C(CF_3)_2-Ph-$, $-Ph-C(O)-Ph-$, Cyclohexylen oder Norbornylen, wobei $-Ph-$ eine Phenylengruppe bezeichnet, bedeuten. |

Besonders bevorzugter Rest $R^5$ ist der Phenylenrest.

Das Organohydrogenpolysiloxan (B) enthält pro Molekül vorzugsweise 5 bis 18 SiH-Gruppen. Die bei 25°C gemessene Viskosität des Bestandteils (B) beträgt vorzugsweise 2 mPa.s bis 1 Pa.s.

Aufgrund der Labilität der SiH-Gruppe kann der Bestandteil (B) herstellungsbedingt einen geringen Gehalt, typischerweise <100 Gew.-ppm, Si-gebundener OH-Gruppen aufweisen.

Beispiele für Kohlenwasserstoffreste $R^7$ sind Alkylreste, wie Methyl-, Ethyl-, n-Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Arylreste, wie Phenyl-, Ethylphenyl-, Tolyl-, Xylyl-, Mesityloder Naphthylrest; Aralkylreste, wie Benzyl-, Phenylethyl- oder Phenylpropylrest; Alkenyl- oder Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Aralkenylreste, wie Phenylethenyl- und Phenylethinyl-; sowie halogensubstituierte oder Heteroatome enthaltende Derivate der vorstehenden Reste, wie 3-Chlorpropyl-, 3-Brompropyl-, Decafluoro-1,1,2,2-tetrahydrooctyl-, (p-Chlormethyl)phenyl-, (p-Chlormethyl)phenethyl-, Hydroxymethyl-, Hydroxyethyl-, Hydroxypropyl-, Hydroxybutyl, 2-Bromvinyl-, 2-Allyloxymethyl-, Acetyl-, Acetoxymethyl-, Acetoxyethyl-, Acetoxypropyl-, 3-Phenoxypropyl-, Benzoyloxypropyl-, Mercaptopropyl-, Cyanoethyl-, Cyanopropyl-, 3-Cyanobutyl-, 3-Isocyanatopropyl-, 2-(Carbomethoxy)ethyl-, 10-(Carbomethoxy)decyl-, 2-(Carboxymethylthio)ethyl-, 3-Carboxypropyl-, Aminomethyl-, Aminoethyl-, Aminopropyl-, Aminohexyl-, Aminoethylaminopropyl-, 3-(N-Allylamino)propyl-, (Aminoethylaminomethyl)phenethyl-, m-Aminophenyl-, 3-(m-Aminophenoxy)propyl-, 3-Acryloxypropyl-, 3-Acryloxy-2-hydroxypropyl-, 4-(Acryloxymethyl)phenethyl-, Methacryloxymethyl-, Methacryloxyethyl- oder Methacryloxypropylrest. Bevorzugte Reste $R^7$ sind Methyl-, Ethyl-, Propyl-, Butyl-, Octyl-, Vinyl-, Allyl-, Phenyl-, 3,3,3-Trifluorpropyl- und Cyanopropylrest. Besonders bevorzugte Reste $R^7$ sind Methyl-, Vinyl- und Phenylrest.

Beispiele für die Reste $R^8$ sind Epoxyethyl-, 2,3-Epoxypropyl-, 3,4-Epoxybutyl-, 5,6-Epoxyhexyl-, 9,10-Epoxydecyl-, Glycidyloxy-, 3-Glycidyloxypropyl-, Glycidyloxyisobutyl-, 2-Methylglycidyloxypropyl-, 3-Phenylglycidyloxypropyl-, Glycidyloxyphenylnonyl-, Glycidyloxybenzylethyl-, 3,4-Epoxycyclohexyl-, 2-(3,4-Epoxycyclohexyl)ethyl-, 3-(3,4-Epoxycyclohexyl)propyl-, 1,4-Epoxycyclohexyl- oder 2-(1,4-Epoxycyclohexyl)ethylrest. Bevorzugte Reste $R^8$ sind 3,4-Epoxycyclohexyl-,3-(3,4-Epoxycyclohexyl)propyl- und Glycidoxypropylrest. Vorzugsweise weist Rest $R^8$ 2 bis 10 Kohlenstoffatome auf. Der besonders bevorzugte Rest $R^8$ ist der Glycidoxypropylrest.

| | |
|---|---|
| $R^9$ | einen über eine Si-O-C-, Si-O-N- oder Si-N-Verknüpfung an Si gebundenen hydrolysierbaren monovalenten gegebenenfalls halogensubstituierten, gegebenenfalls O-, N-, S-, oder P-Atome enthaltenden Kohlenwasserstoffrest mit 1 bis 20 Kohlenstoffatomen bedeutet. |

Beispiele für die Reste $R^9$ sind

a) Alkoxy-, Enoxy- oder Aryloxygruppen der allgemeinen Formel - $OR^{10}$, wie Methoxy-, Ethoxy-, n-Propoxy-, iso-Propoxy-, n-Butoxy-, sec-Butoxy-, tert-Butoxy-, 2-Ethylbutoxy-, 2-Ethylhexoxy-, Vinyloxy-, Allyloxy-, Isopropenyloxy-, Cyclobutenyloxy-, Cyclohexenyloxy-, 1,3-Butadienyloxy-, Propargyloxy-, Phenoxy-, Benzyloxy- oder m,p-Vinylbenzyloxyrest;

b) Acyloxygruppen der allgemeinen Formel - $OCOR^{10}$, wie Formyloxy-, Acetoxy-, 2-Ethylhexanoxy-, Acryloxy-, Methacryloxy-, Benzoyloxy- oder Norbornylacetoxyrest;

c) Aminogruppen der allgemeinen Formel - $NH_2$, - $NHR^{10}$ oder - $NR^{10}_2$, wie Dimethylamino-, Diisopropylamino-, Allylamino-, n-Butylamino-, sec-Butylamino- oder Cyclohexylaminorest;

d) Oximgruppen der allgemeinen Formel - $ON=CH_2$, - $ON=CHR^{10}$ oder - $ON=CR^{10}_2$, wie Methylethylketoxim-, Methylisobutylketoxim-, Methyl-n-amylketoxim- oder Dimethylketoximrest;

e) Amidgruppen der allgemeinen Formel - $NH-C(=O)-R^{10}$ oder - $NR^{10}-C(=O)-R^{10}$, wie N-Methylbenzamido- oder N-Methylacetamidorest;

f) Aminoxygruppen der allgemeinen Formel - $ONH_2$, - $ONHR^{10}$ oder - $ONR^{10}_2$, wie Hydroxylaminorest; oder

g) Halogensubstituierte oder Heteroatome enthaltende oder komplexer zusammengesetzte Derivate der voranstehend genannten Reste, wie p-Aminophenoxy-, 2-Methoxyethoxy-, 1-Methoxy-2-propoxy-, 1-Methoxy-isopropenyloxy-, Methoxyethoxyethoxy-, 1-Methoxy-2-methylpropenyloxy-, Acryloxymethoxy-, Methacryloxy(polyethylenoxy)-, Furyloxy-, N-Vinylformamidorest sowie -O-Ph-C(=O)-Ph, -O-C($CF_3$)=CH-C(=O)-$CF_3$, -O-C($CH_3$)=CH-C(=O)-$CH_3$, -O-C($CH_3$)$_2$-CH=$CH_2$, -NH-C(=O)-$CH_3$, -O-C(=O)-$CH_2$Br, -O-C(=O)-$CF_3$, -O-C(=O)-C≡CH oder - O-$CH_2$-C(=O)-O-Si($CH_3$)$_3$,

wobei die Reste $R^{10}$ monovalente aliphatische oder aromatische, gesättigte oder ungesättigte, gegebenenfalls halogensubstituierte Kohlenwasserstoffreste mit 1 bis 10 Kohlenstoffatomen darstellen. Bevorzugte Reste $R^9$ sind die Alkoxyreste, wie Methoxy-, Ethoxy-, Propoxy- und Butoxyrest. Der besonders bevorzugte Rest $R^9$ ist der Methoxyrest.

Als Organosiliciumverbindung (C) besonders bevorzugt ist Glycidyloxypropyltrimethoxysilan (Glymo).

Die Reste $R^1$ bis $R^{10}$ können in allen vorstehenden Formeln gleich oder verschieden sein. Als Heteroatome sind bevorzugt N, O, S. Als Halogensubstituenten sind bevorzugt F, Cl, Br.

Auf 100 Gew.-Teile Diorganopolysiloxan (A) werden vorzugsweise 0,1 bis 50 Gew.-Teile, insbesondere 0,5 bis 10 Gew.-Teile Organohydrogenpolysiloxan (B) und 0,1 bis 10 Gew.-Teile, insbesondere 0,5 bis 5 Gew.-Teile Organosiliciumverbindung (C) eingesetzt.

Hydrosilylierungskatalysator (D) dient als Katalysator für die als Hydrosilylierung bezeichnete Additionsreaktion zwischen den aliphatisch ungesättigten Kohlenwasserstoffresten $R^2$ der Diorganopolysiloxane (A) und den siliciumgebundenen Wasserstoffatomen der Organohydrogenpolysiloxane (B). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (D) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl$_2$.Olefin)$_2$ und H(PtCl$_3$.Olefin) verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl$_2$C$_3$H$_6$)$_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. (Ph$_3$P)$_2$PtCl$_2$. Besonders bevorzugt sind Komplexe des Platins mit Vinylsiloxanen, wie sym-Divinyltetramethyldisiloxan.

Die Menge des eingesetzten Hydrosilylierungskatalysators (D) richtet sich nach der gewünschten Vernetzungsgeschwindigkeit sowie ökonomischen Gesichtspunkten. Üblicherweise werden pro 100 Gew.-Teile Diorganopolysiloxane (A) vorzugsweise 1 x 10$^{-5}$ bis 5 x 10$^{-2}$ Gew.-Teile, insbesondere 1 x 10$^{-3}$ bis 1 x 10$^{-2}$ Gew.-Teile Platin-Katalysatoren, berechnet als Platin-Metall eingesetzt.

Die selbsthaftenden additionsvernetzenden Siliconzusammensetzungen können gegebenenfalls weitere Bestandteile (E), wie Füllstoffe, Inhibitoren, Stabilisatoren, Pigmente, und Katalysatoren enthalten.

Um eine ausreichend hohe mechanische Festigkeit des vernetzten Siliconkautschuks zu erzielen, ist es bevorzugt, aktiv verstärkende Füllstoffe als Bestandteil (F) in die additionsvernetzenden Siliconzusammensetzungen einzuarbeiten. Als aktiv verstärkende Füllstoffe (F) werden vor allem gefällte und pyrogene Kieselsäuren, sowie Gemische derselben verwendet. Die spezifische Oberfläche dieser aktiv verstärkenden Füllstoffe sollte mindestens 50 m$^2$/g betragen oder vorzugsweise im Bereich von 100 bis 400 m$^2$/g gemäß der Bestimmung nach der BET-Methode liegen. Derartige aktiv verstärkende Füllstoffe sind auf dem Gebiet der Siliconkautschuke sehr gut bekannte Materialien.

Die Compoundierung der selbsthaftenden additionsvernetzenden Siliconzusammensetzungen erfolgt durch Mischen der oben aufgeführten Komponenten in beliebiger Reihenfolge.

Die Vernetzung der selbsthaftenden additionsvernetzenden Siliconzusammensetzungen erfolgt vorzugsweise durch Erwärmen, vorzugsweise bei 30 bis 250°C, bevorzugt bei mindestens 50°C, insbesondere bei mindestens 100°C, bevorzugt bei höchstens 200°C, insbesondere bei höchstens 180°C.

Gegenstand der Erfindung sind auch die additionsvernetzten Siliconelastomere.

Die Siliconzusammensetzungen können mit einem Substrat verbunden werden, indem die Siliconzusammensetzungen auf das Substrat aufgebracht und anschliessend vorzugsweise durch Erwärmen auf 30 bis 250°C zu einem Verbundmaterial vernetzt werden.

Die selbsthaftenden additionsvernetzenden Siliconzusammensetzungen können insbesondere überall dort mit Vorteil eingesetzt werden, wo eine gute Haftfestigkeit zwischen dem additionsvernetzten Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen.

Die selbsthaftenden additionsvernetzenden Siliconzusammensetzungen eignen sich zur Herstellung von Verbundmaterial durch Beschichten, Verkleben, Vergießen und zur Herstellung von Formartikeln.

Insbesondere eignen sich die selbsthaftenden additionsvernetzenden Siliconzusammensetzungen zum Verguß und zum Verkleben elektrischer und elektronischer Teile sowie zur Herstellung von Verbundformteilen. Unter Verbundformteilen wird hier ein einheitlicher Formartikel aus einem Verbundmaterial verstanden, der aus einem aus den Siliconzusammensetzungen hergestelltem Siliconelastomerteil und mindestens einem Substrat so zusammengesetzt ist, daß zwischen beiden Teilen eine feste, dauerhafte Verbindung besteht. Vorzugsweise erfolgt die Herstellung eines solchen Verbundformteiles, indem ein organischer Kunststoff zu einem Formartikel verarbeitet wird und anschließend die Siliconzusammensetzungen mit diesem Formteil in Verbindung gebracht und vernetzt werden, was z.B. im Spritzgußverfahren, mittels Extrusion oder im sog. pressmoulding-Verfahren erfolgen kann. Verbundmaterialien und insbesondere Verbundformteile können in vielfältigsten Anwendungsbereichen zum Einsatz kommen, z.B. in der Elektronik-Haushaltgeräte-, Gebrauchsgüter-, Bau- und Automobilindustrie, in der Medizintechnik, der Sport- und Freizeitartikelherstellung etc.

In den nachfolgenden Beispielen sind, falls jeweils nicht anders angegeben,

    a) alle Drücke 0,10 MPa (abs.);
    b) alle Temperaturen 20° C .

Beispiele:

Substrate

Die Haftung der erfindungsgemäßen sowie nicht erfindungsgemäßen additionsvernetzten Siliconelastomere wurde auf folgenden Substraten getestet:

    a) Polybutylenterephthalat (PBT): Ultradur® B4300G6 (BASF AG; 30% GF)
    b) Polyamid 6: Durethan® BKV30 (Bayer AG; 30%GF)
    c) Polycarbonat (PC): Lexan® (General Electric)
    d) Aluminium (Industriequalität; nicht grundiert)
    e) Stahl: VA-Stahl (Industriequalität)

Charakterisierung der Haftung (Beispiele 1, 2, 3, 4 und 5)

Zur Charakterisierung der Haftfestigkeit werden 100,0 g einer vernetzerfreien additionsvernetzenden Flüssigsiliconelastomermasse, die 71.6 Gew.-% Diorganopolysiloxan der Viskosität 20000 mPa.s und 28.4 Gew.-% verstärkenden Füllstoff enthält und bei der Fa. Wacker-Chemie GmbH unter der Bezeichnung ELASTOSIL® LR 3003/40 A erhältlich ist, mit einer vorgegebenen Menge des gemäß nachfolgender Beispiele hergestellten haftungsvermittelnden Zusatzes, welcher zugleich als Vernetzer dient, innig vermischt und anschließend unter Vakuum bei Raumtemperatur entgast. Diese Masse wird sofort anschließend als ca. 1,2 mm dicke Schicht auf die zuvor mit Ethanol gereinigte Oberfläche des Substrates mit einem Rakel aufgebracht. Nun wird ein grundierter Aluminiumhohlkörper mit einer Kontaktfläche von 100 mm$^2$ auf die noch unvernetzte Schicht der Flüssigsiliconelastomermasse aufgesetzt. Die Grundierung des Aluminiumhohlkörpers gewährleistet eine in jedem Fall feste Anbindung des vernetzten Siliconelastomers, so dass bei Zugbeanspruchung entweder kohäsiver Riß innerhalb des Siliconelastomers erfolgt oder eine adhäsive Rißbildung zwischen Siliconelastomer und Substrat auftritt. Mittels eines Abstandhalters und durch geringen Druck auf den Aluminiumhohlkörper wird eine definierte Schichtdicke von 1 mm eingestellt. Das auf diese Weise hergestellte Laminat, bestehend aus Substrat, 1 mm dicker Flüssigsiliconelastomermasse und Aluminiumhohlkörper, wird nun bei einer Temperatur von 130°C während 30 min in einem UmluftTrockenschrank vulkanisiert, wobei eine vollständige Vernetzung der Flüssigsiliconelastomermasse erfolgt; anschließend wird auf Raumtemperatur abgekühlt. Mittels einer Zugdehnungsmaschine wird dann die maximale Kraft gemessen, die notwendig ist, um den Aluminiumhohlkörper vollständig vom Substrat zu trennen, d.h., den Haftverbund aufzulösen. Der auf die Kontaktfläche von 100 mm$^2$ bezogene Maximalwert dieser Kraft wird als Abrißspannung in N/mm$^2$ angegeben. Je Beispiel werden 10 Laminate gemessen, die Abrißspannung als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% bedeutet, dass die Delaminierung ausschließlich durch Rißwachstum innerhalb des Siliconelastomers erfolgte.

**Beispiel 1** (erfindungsgemäß):

In einem Rührwerk werden 5,0 kg eines Trimethylsiloxy-endständigen Methylhydrogenpolysiloxanes, Me$_3$Si-(-O-SiH(Me))$_n$-O-SiMe$_3$, das gemäß $^{29}$Si-NMR eine zahlenmittlere Kettenlänge von n=53 besitzt, und 5,0 kg eines Trimethylsiloxy-endständigen Siloxan-Copolymers, bestehend aus Dimethylsiloxy- und Methylphenylsiloxy-Einheiten im Molverhältnis 15,2 : 21,8 und einer bei 25°C gemessenen Viskosität von 100 mPa.s , vorgelegt. Unter fortwährendem Rühren werden bei Raumtemperatur 1,8 g Phosphornitrilchlorid, hergestellt nach US-A-4,203,913 zugegeben. Nach Anlegen eines Vakuums von <20 mbar wird 5 min gerührt und anschließend das Vakuum mit N$_2$ gebrochen. Anschließend wird 2 h bei einer Temperatur von 100°C gerührt. Man gibt 14 g Hexamethyldisilazan zu und rührt weitere 15 min. Abschließend wird ein Vakuum von <10 mbar angelegt, die Mischung unter fortwährendem Rühren 1 h bei 100°C von flüchtigen Bestandteilen befreit, das Vakuum mit N$_2$ gebrochen, auf Raumtemperatur abgekühlt und das Reaktionsprodukt filtriert. Man erhält ein Trimethylsiloxy-endständiges Polyorganosiloxan, das aus -O-Si(Me)$_2$-, -O-SiH(Me)- und -O-Si(Me)Ph- Einheiten im Molverhältnis 15,2 : 63,0 : 21,8 zusammengesetzt ist, und bei 25°C eine Viskosität von 32,1 mm$^2$/s aufweist. Das Produkt enthält durchschnittlich 17 Si-H-Gruppen je Molekül.
Die Herstellung des haftungsvermittelnden Zusatzes, der in einer Menge von 1,3 g auf 100 g zu vernetzender Siliconelastomermasse eingesetzt wird, erfolgt durch Vermischen von 10 Gew.-Teilen Glycidyloxypropyltrimethoxysilan mit 16 Gew.-Teilen des voranstehend beschriebenen Reaktionsproduktes. Die Ergebnisse der Haftungsmessungen sind in Tab.1 angegeben.

**Beispiel 2** (nicht erfindungsgemäßes Vergleichsbeispiel):

Statt des in Beispiel 1 beschriebenen phenylhaltigen Vernetzers wird ein Trimethylsiloxy-endständiges Polyorganosiloxan eingesetzt, welches lediglich -O-Si(Me)$_2$- und -O-SiH(Me)-Einheiten im Molverhältnis 29 : 71 enthält und eine Viskosität bei 25°C von 30 mm$^2$/s aufweist; dieser Vernetzer enthält durchschnittlich 33 Si-H-Gruppen je Molekül. Die Herstellung des haftungsvermittelnden Zusatzes, der in einer Menge von 1,05 g auf 100 g zu vernetzender Siliconelastomermasse eingesetzt wird, erfolgt durch Vermischen von 10 Gew.-Teilen Glycidyloxypropyltrimethoxysilan mit 11 Gew.-Teilen des voranstehend beschriebenen phenylfreien Vernetzers. Dieses Mischungsverhältnis sowie die Einsatzmenge an haftungsvermittelndem Zusatz stellen sicher, daß die gemäß Beispiel 1 und Beispiel 2 hergestellten additionsvernetzenden Siliconelastomermassen den gleichen Gehalt an Si-gebundenem Wasserstoff aufweisen. Die Ergebnisse der Haftungsmessungen sind in Tab. 1 angegeben.

**Beispiel 3** (erfindungsgemäß):

Zu 150 g eines Trimethylsiloxy-endständigen Methylhydrogenpolysiloxanes, Me$_3$Si-(-O-SiH(Me))$_n$-O-SiMe$_3$, das gemäß $^{29}$Si-NMR eine zahlenmittlere Kettenlänge von n=53 besitzt, und 150 g eines Trimethylsiloxy-endständigen Siloxan-Copolymers, bestehend aus Dimethylsiloxy- und Diphenylsiloxy-Einheiten, welches einen Phenylgehalt von 19,2 Gew.-% hat und eine bei 25°C gemessene Viskosität von 85 mPa.s aufweist, werden bei Raumtemperatur unter fortwährendem Rühren 0,05 g Phosphornitrilchlorid, hergestellt nach US-A-4,203,913 zugegeben. Nach Anlegen eines Vakuums von <20 mbar wird 5 min gerührt und anschließend das Vakuum mit N$_2$ gebrochen. Anschließend wird 2 h bei einer Temperatur von 100°C gerührt.
Man gibt 0,5 g Hexamethyldisilazan zu und rührt weitere 15 min. Abschließend wird ein Vakuum von <10 mbar angelegt, die Mischung unter fortwährendem Rühren 1 h bei 100°C von flüchtigen Bestandteilen befreit, das Vakuum mit N$_2$ gebrochen, auf Raumtemperatur abgekühlt und das Reaktionsprodukt filtriert. Man erhält ein Trimethylsiloxy-endständiges Polyorganosiloxan, das aus -O-Si(Me)$_2$-, -O-SiH(Me)- und -O-SiPh$_2$- Einheiten im Molverhältnis 26,5 : 70,0 : 3,5 zusammengesetzt ist, und bei 25°C eine Viskosität von 455 mm$^2$/s aufweist.

Die Herstellung des haftungsvermittelnden Zusatzes, der in einer Menge von 1,3 g auf 100 g zu vernetzender Siliconelastomermasse eingesetzt wird, erfolgt durch Vermischen von 10 Gew.-Teilen Glycidyloxypropyltrimethoxysilan mit 16 Gew.-Teilen des voranstehend beschriebenen Reaktionsproduktes. Die Ergebnisse der Haftungsmessungen sind in Tabelle 1 angegeben.

**Beispiel 4** (erfindungsgemäß):

150 g eines Trimethylsiloxy-endständigen Methylhydrogenpolysiloxanes, $Me_3Si-(-O-SiH(Me))_n-O-SiMe_3$, das gemäß $^{29}$Si-NMR eine zahlenmittlere Kettenlänge von n=53 besitzt, 26 g eines Trimethylsiloxy-endständigen Polydimethylsiloxans, das bei 25°C eine Viskosität von 100 mPa.s aufweist, und 112 g 1,3,5-Trimethyl-1,3,5-tris(3,3,3-trifluorpropyl)cyclotrisiloxan werden bei Raumtemperatur vorgelegt und unter fortwährendem Rühren mit 0.05 g Phosphornitrilchlorid, hergestellt nach US-A-4,203,913, vermischt. Nach Anlegen eines Vakuums von <20 mbar wird 5 min gerührt und anschließend das Vakuum mit $N_2$ gebrochen. Anschließend wird 2 h bei einer Temperatur von 100°C gerührt. Zum Zwecke der Deaktivierung des Katalysators (Phosphornitrilchlorid) wird während 15 min gasförmiger Ammoniak eingeleitet. Anschließend wird ein Vakuum von <10 mbar angelegt, die Mischung unter fortwährendem Rühren 1 h bei 100°C von flüchtigen Bestandteilen befreit, das Vakuum mit $N_2$ gebrochen, auf Raumtemperatur abgekühlt und das Reaktionsprodukt filtriert. Man erhält ein Trimethylsiloxy-endständiges Polyorganosiloxan, das aus $-O-Si(Me)_2-$, $-O-SiH$(Me)- und $-O-Si(Me)$ $(CH_2CH_2CF_3)-$ Einheiten im Molverhältnis 10,1 : 69,9 : 20,0 zusammengesetzt ist, und bei 25°C eine Viskosität von 52,3 $mm^2$/s aufweist.

Die Herstellung des haftungsvermittelnden Zusatzes, der in einer Menge von 1,3 g auf 100 g zu vernetzender Siliconelastomermasse eingesetzt wird, erfolgt durch Vermischen von 10 Gew.-Teilen Glycidyloxypropyltrimethoxysilan mit 16 Gew.-Teilen des voranstehend beschriebenen Reaktionsproduktes.
Die Ergebnisse der Haftungsmessungen sind in Tabelle 1 angegeben.

**Beispiel 5** (nicht erfindungsgemäßes Vergleichsbeispiel):

Die Zusammensetzung entspricht der in Beispiel 1 beschriebenen Siliconelastomermasse, mit dem Unterschied, dass kein Glycidyloxypropyltrimethoxysilan zugegeben wurde. Die Ergebnisse der Haftungsmessungen sind in Tabelle 1 angegeben.

Tabelle 1:

| (Abrißspannung in [N/mm$^2$]; Anteil kohäsives Versagen in [%]) | | | | | | | | | | |
|---|---|---|---|---|---|---|---|---|---|---|
| Beispiel | PBT | | Polyamid 6 | | PC | | Aluminium | | Stahl | |
| | [N/mm$^2$] | [%] | [N/mm$^2$] | [%] | [N/mm$^2$] | [%] | [N/mm$^2$] | [%] | [N/mm$^2$] | [%] |
| 1 | 2.72 | 100 | 3.05 | 50 | 2.38 | 0 | 2.89 | 100 | 2.65 | 100 |
| 2 | 1.60 | 0 | 1.41 | 0 | 1.51 | 0 | 1.90 | 0 | 1.98 | 0 |
| 3 | 2.56 | 100 | 3.12 | 30 | 2.33 | 0 | 3.23 | 100 | 2.55 | 90 |
| 4 | 2.22 | 80 | 2.78 | 40 | 2.08 | 30 | 2.78 | 100 | 2.25 | 90 |
| 5 | 1.20 | 10 | 1.53 | 20 | 1.87 | 0 | 2.20 | 20 | 2.13 | 20 |

Die in Tabelle 1 angegebenen Werte belegen die hohe Haftfestigkeit zwischen dem erfindungsgemäßen additionsvernetzten Siliconelastomer (Beispiele 1, 3 und 4) und diversen organischen Kunststoffen bzw. Metallen. Wie anhand des Beispiels 2 zu ersehen ist, führt das alleinige Vorhandensein des Bestandteils (C) (z.B. Glycidyloxypropyltrimethoxysilan) nicht zu einer hohen Haftfestigkeit, sondern nur in Verbindung mit einem erfindungsgemäßen Bestandteil (B). Wie anhand des Beispiels 5 zu ersehen ist, führt auch das alleinige Vorhandensein des Bestandteils (B) nicht zu einer hohen Haftfestigkeit, sondern nur in Verbindung mit einem erfindungsgemäßen Bestandteil (C). Dies ist Beleg einer Synergie der haftungsvermittelnden Bestandteile (B) und (C) der erfindungsgemäßen Siliconelastomermasse.

Charakterisierung der Haftung (Beispiele 6, 7, 8, 9 und 10)

In eine Edelstahlpreßform wird ein Substratstreifen der Abmessungen 60x20x2mm eingelegt und die Form mit der zu testenden additionsvernetzenden Siliconelastomermasse gefüllt.
Die Preßvulkanisation erfolgt während 5 min bei einer Temperatur von 170°C und einer Druckkraft von 30 to. Nach Entnahme des Laminates wird der starre Substratkörper fest eingespannt und die maximale Trennkraft bestimmt, die notwendig ist, den anhaftenden Siliconelastomerstreifen im Schälversuch abzulösen. Die Bestimmung der Trennkraft erfolgt gemäß DIN 53531 und wird in N/mm angegeben. Je Beispiel werden 10 Laminate gemessen, die Trennkraft als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% bedeutet, dass die Delaminierung ausschließlich durch Rißwachstum innerhalb des Siliconelastomers erfolgte.

Beispiel 6 (erfindungsgemäß):

Die Zusammensetzung entspricht der in Beispiel 1 beschriebenen erfindungsgemäßen additionsvernetzenden Siliconelastomermasse. Die Ergebnisse der Trennkraftmessungen sind in Tabelle 2 angegeben.

Beispiel 7 (nicht erfindungsgemäßes Vergleichsbeispiel):

Die Zusammensetzung entspricht der in Beispiel 2 beschriebenen nicht erfindungsgemäßen additionsvernetzenden Siliconelastomermasse. Die Ergebnisse der Trennkraftmessungen sind in Tabelle 2 angegeben.

Beispiel 8 (erfindungsgemäß):

Die Zusammensetzung entspricht der in Beispiel 3 beschriebenen erfindungsgemäßen additionsvernetzenden Siliconelastomermasse. Die Ergebnisse der Trennkraftmessungen sind in Tabelle 2 angegeben.

Beispiel 9 (erfindungsgemäß):

Die Zusammensetzung entspricht der in Beispiel 4 beschriebenen erfindungsgemäßen additionsvernetzenden Siliconelastomermasse.
Die Ergebnisse der Trennkraftmessungen sind in Tabelle 2 angegeben.

Beispiel 10 (nicht erfindungsgemäßes Vergleichsbeispiel):

Die Zusammensetzung entspricht der in Beispiel 5 beschriebenen nicht erfindungsgemäßen additionsvernetzenden Siliconelastomermasse. Die Ergebnisse der Trennkraftmessungen sind in Tabelle 2 angegeben.

Tabelle 2:

| (Trennkraft in [N/mm]; Anteil kohäsives Versagen in [%]) | | | | | | | | |
|---|---|---|---|---|---|---|---|---|
| Beispiel | PBT | | Polyamid 6 | | Aluminium | | Stahl | |
| | [N/mm] | [%] | [N/mm] | [%] | [N/mm] | [%] | [N/mm] | [%] |
| 6 | 14.8 | 100 | 9.3 | 30 | 14.6 | 100 | 16.4 | 100 |
| 7 | 7.1 | 20 | 4.9 | 0 | 7.2 | 10 | 12.8 | 80 |
| 8 | 12.3 | 100 | 11.0 | 30 | 13.3 | 100 | 15.5 | 100 |
| 9 | 11.8 | 80 | 7.7 | 40 | 10.0 | 90 | 14.4 | 100 |
| 10 | 6.2 | 0 | 4.4 | 0 | 8.9 | 30 | 10.5 | 40 |

Die in Tabelle 2 angegebenen Werte belegen die hohe Haftfestigkeit von Laminaten, bestehend aus dem erfindungsgemäßen additionsvernetzten Siliconelastomer (Beispiele 6, 8 und 9) und organischen Kunststoffen bzw. Metallen, für den Fall der Preßvulkanisation. Wie anhand des Beispiels 7 zu ersehen ist, führt das alleinige Vorhandensein des Bestandteils (C) (z.B. Glycidyloxypropyltrimethoxysilan) nicht zu einer hohen Haftfestigkeit, sondern nur in Verbindung mit einem erfindungsgemäßen Bestandteil (B). Wie anhand des Beispiels 10 zu ersehen ist, führt auch das alleinige Vorhandensein des Bestandteils (B) nicht zu einer hohen Haftfestigkeit, sondern nur in Verbindung mit einem erfindungsgemäßen Bestandteil (C). Dies ist Beleg einer Synergie der haftungsvermittelnden Bestandteile (B) und (C) der erfindungsgemäßen Siliconelastomermasse.

Vulkanisationscharakteristik, optische und mechanische Eigenschaften sowie Druckverformungsrest erfindungsgemäßer und nicht erfindungsgemäßer additionsvernetzender Siliconmassen (Beispiele 11, 12 und 13)

Zwecks Beurteilung des Eigenschaftsprofils der selbsthaftenden Siliconelastomermassen (erfindungsgemäß bzw. nicht erfindungsgemäß) wurden 200,0 g einer vernetzerfreien additionsvernetzenden Flüssigsiliconelastomermasse, die 71.6 Gew.-% Diorganopolysiloxan der Viskosität 20000 mPa.s und 28.4 Gew.-% verstärkenden Füllstoff enthält, die bei der Fa. Wacker-Chemie GmbH unter der Bezeichnung ELASTOSIL® LR 3003/40 A erhältlich ist, mit einer in den nachfolgenden Beispiele 11, 12 und 13 beschriebenen Menge an haftungsvermittelndem Zusatz, welcher zugleich als Vernetzer dient, innig vermischt und anschließend unter Vakuum von 10 mbar entgast, in eine Preßform gefüllt und bei einer Temperatur von 175°C während 10 min zu einer 2 mm dicken Siliconelastomerfolie vernetzt. Die Folie wurde hinsichtlich Transparenz und mechanischer Eigenschaften (Shore A gemäß DIN 53505; Reißdehnung und Reißfestigkeit gemäß DIN 53504; Rückprallelastizität gemäß DIN 53512; Weiterreißwiderstand gemäß ASTM D 624 B; Druckverformungsrest gemäß DIN 35517, 22h/175°C) charakterisiert. Des weiteren wurde die Vernetzungscharakteristik der frisch hergestellten unvernetzten Siliconmasse vulkametrisch bestimmt (Anspringtemperatur; Vernetzungsgeschwindigkeit; maximales Drehmoment).

Beispiel 11 (nicht erfindungsgemäßes Vergleichsbeispiel):

Es werden 2,1 g des in Beispiel 2 beschriebenen haftungsvermittelnden Zusatzes gemäß des obig beschriebenen Verfahrens verwendet. Die Ergebnisse sind in den Tabellen 3 und 4 angegeben.

Beispiel 12 (erfindungsgemäß):

Es werden 2,6 g des in Beispiel 1 beschriebenen haftungsvermittelnden Zusatzes gemäß des obig beschriebenen Verfahrens verwendet. Die Ergebnisse sind in den Tabellen 3 und 4 angegeben.

Beispiel 13 (nicht erfindungsgemäßes Vergleichsbeispiel):

Zu 250 g eines Trimethylsiloxy-endständigen Methylhydrogenpolysiloxanes, $Me_3Si-(-O-SiH(Me))_n-O-SiMe_3$, das gemäß $^{29}$Si-NMR eine zahlenmittlere Kettenlänge von n=53 besitzt, und 750 g eines Trimethylsiloxy-endständigen Siloxan-Copolymers, bestehend aus Dimethylsiloxy- und Methylphenylsiloxy-Einheiten, welches eine bei 25°C gemessene Viskosität von 100 mPa.s aufweist, werden bei Raumtemperatur unter fortwährendem Rühren 0,18 g Phosphornitrilchlorid, hergestellt nach US-A-4,203,913 zugegeben. Nach Anlegen eines Vakuums von <20 mbar wird 5 min gerührt und anschließend das Vakuum mit $N_2$ gebrochen. Anschließend wird 2 h bei einer Temperatur von 100°C gerührt. Man gibt 1,5 g Hexamethyldisilazan zu und rührt weitere 15 min. Abschließend wird ein Vakuum von <10 mbar angelegt, die Mischung unter fortwährendem Rühren 1 h bei 100°C von flüchtigen Bestandteilen befreit, das Vakuum mit $N_2$ gebrochen, auf Raumtemperatur abgekühlt und das Reaktionsprodukt filtriert. Man erhält 933 g eines klaren Siliconöls mit einer Viskosität von 175 mPa.s und einem Gehalt an Si-gebundenen Wasserstoff von 0,39 Gew.-%. Gemäß des $^{29}$Si-NMR-Spektrums handelt es sich bei dem Reaktionsprodukt um ein Trimethylsiloxy-endständiges Siloxan-Copolymer, bestehend aus $-O-Si(Me)_2-$, $-O-SiH(Me)-$ und $-O-Si(Me)Ph-$ Einheiten im Molverhältnis 25,9 : 36,2 : 37,9.
Die Herstellung des haftungsvermittelnden Zusatzes, der in einer Menge von 4,0 g gemäß des obig beschriebenen Verfahrens verwendet wird, erfolgt durch Vermischen von 10 Gew.-Teilen Glycidyloxypropyltrimethoxysilan mit 30 Gew.- Teilen des voranstehend beschriebenen Reaktionsproduktes. Die Ergebnisse sind in den Tabellen 3 und 4 angegeben.

Tabelle 3:

| Transparenz und Vernetzungscharakteristik | | | | |
|---|---|---|---|---|
| Beispiel | Transparenz | Anspringtemperatur | Vernetzungsgeschwindigkeit | Maximales Drehmoment |
| | | [°C] | [Nm/min] | [Nm] |
| 11 | Transluzent | 105 | 1.09 | 0.46 |
| 12 | Transluzent | 114 | 0.52 | 0.36 |
| 13 | Milchig trüb | 103 | 0.13 | 0.19 |

Die in Tabelle 3 angegebenen Meßergebnisse belegen die Nachteile hinsichtlich Transparenz und Vernetzungscharakteristik nicht erfindungsgemäßer, selbsthaftender Siliconelastomermassen, deren SiH-haltiger Bestandteil sich durch höhere Gehalte an unverträglichen Resten (>12 Mol-%) auszeichnet. Neben einer zunehmenden Trübung des vernetzten Siliconelastomers erfolgt eine gleichfalls zunehmende Inhibierung der Vernetzungsreaktion, weshalb eine Beschränkung des Gehalts an unverträglichen Resten des Bestandteils (B) auf <12 Mol.-%, wie in den erfindungsgemäßen Siliconmassen, notwendig ist.

Tabelle 4:

| Mechanische Eigenschaften | | | | | | |
|---|---|---|---|---|---|---|
| Beispiel | Shore A | Reißdehnung | Reißfestigkeit | Rückprallelastizität | Weiterreißwiderstand | Druckverformungsrest |
| | | [%] | [N/mm$^2$] | [%] | [N/mm] | [%] |
| 11 | 39 | 650 | 8.6 | 54 | 25.0 | 44 |
| 12 | 34 | 750 | 8.7 | 49 | 23.8 | 48 |
| 13 | 26 | 950 | 8.5 | 36 | 33.7 | 75 |

Die in Tabelle 4 angegebenen Werte der mechanischen Vulkanisateigenschaften belegen die bei sehr hohem Gehalt unverträglicher Reste im SiH-Vernetzer auftretende massive Beeinträchtigung der Vernetzung, die sich in niedriger Netzpunktdichte (geringe Shore A, stark verminderte Rückprallelastizität) sowie dem Verbleib zahlreicher reaktiver Gruppen, insbesondere SiH-Gruppen, zeigt (hohe Werte des Druckverformungsrestes).

**Patentansprüche**

1. Selbsthaftende Additionsvernetzende Siliconzusammensetzungen, die

(A) Diorganopolysiloxane der allgemeinen Formel (1)

$$R^1{}_aR^2{}_bSiO_{(4-a-b)/2} \tag{1},$$

in der

$R^1$    Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,

$R^2$    einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,

$b$    Werte von 0,003 bis 2 bedeuten, mit der Maßgabe, dass $1.5<(a+b)<3.0$, dass pro Molekül durchschnittlich mindestens zwei aliphatisch ungesättigte Reste $R^2$ enthalten sind und dass die bei 25°C bestimmte Viskosität der Diorganopolysiloxane (A) 1 mPa.s bis 40 000 Pa.s beträgt,

(B) Organohydrogenpolysiloxane der allgemeinen Formel (2)

$$R^3{}_cR^4{}_dR^5{}_eH_fSiO_{(4-c-d-2e-f)/2} \tag{2},$$

wobei

$R^3$    einen monovalenten aliphatisch gesättigten Kohlenwasserstoffrest mit 1 bis 20 Kohlenstoffatomen,

$R^4$    (a) einen gegebenenfalls halogensubstituierten monovalenten Kohlenwasserstoffrest mit 6 bis 15 Kohlenstoffatomen, welcher mindestens einen aromatischen $C_6$-Ring enthält, oder

(b) einen halogensubstituierten, gegebenenfalls O-, N-, S-, oder P-Atome enthaltenden gesättigten monovalenten Kohlenwasserstoffrest mit 2 bis 20 Kohlenstoffatomen,

$R^5$    einen beidseitig Si-gebundenen bivalenten, gegebenenfalls halogensubstituierten, gegebenenfalls O-, N-, S-, oder P-Atome enthaltenden Kohlenwasserstoffrest mit 6 bis 20 Kohlenstoffatomen und

$c, d, e$ und $f$    positive Zahlen bedeuten, mit der Maßgabe, dass das Organohydrogenpolysiloxan (B) pro Molekül durchschnittlich 3 bis weniger als 20 SiH-Gruppen enthält und dass die bei 25°C bestimmte Viskosität des Organohydrogenpolysiloxans (B) 1 mPa.s bis 100 Pa.s beträgt,

(C) Epoxygruppen und hydrolysierbare Gruppen aufweisende Organosiliciumverbindungen der allgemeinen Formel (3)

$$R^7{}_gR^8{}_hR^9{}_iSiO_{(4-g-h-i)/2} \tag{3},$$

und/oder deren Teilhydrolysate, wobei

$R^7$    einen Wasserstoff-, Hydroxyl- oder einen gegebenenfalls halogen- oder cyanosubstituierten, gegebenenfalls O-, N-, S-, oder P-Atome enthaltenden gesättigten monovalenten Kohlenwasserstoffrest mit 1 bis 20 Kohlenstoffatomen,

**R⁸** einen mindestens eine Epoxygruppe, gegebenenfalls halogensubstituierte, gegebenenfalls O-, N-, S-, oder P-Atome enthaltenden monovalenten Kohlenwasserstoffrest mit 2 bis 20 Kohlenstoffatomen,

**R⁹** einen über eine Si-O-C-, Si-O-N- oder Si-N-Verknüpfung an Si gebundenen hydrolysierbaren monovalenten gegebenenfalls halogensubstituierten, gegebenenfalls O-, N-, S-, oder P-Atome enthaltenden Kohlenwasserstoffrest mit 1 bis 20 Kohlenstoffatomen, mit der Maßgabe, dass gilt, $4 > g \geq 0$, $4 > h > 0$, $4 > i > 0$, $4 \geq (h+i) > 0$ und $4 \geq (g+h+i)$, und

(D) Hydrosilylierungskatalysator enthalten,
**dadurch gekennzeichnet, dass** bei dem Organohydrogenpolysiloxan (B) die Relationen: $0,05 < 100 \, (d+e)/(c+d+e+f) < 12$ erfüllt sind.

2. Additionsvernetzende Siliconzusammensetzungen nach Anspruch 1, bei denen die bei 25°C gemessene Viskosität des Bestandteils (B) 2 mPa.s bis 1 Pa.s beträgt.

3. Verfahren zur Herstellung von additionsvernetzten Siliconelastomeren, bei dem die selbsthaftenden additionsvernetzenden Siliconzusammensetzungen gemäß Anspruch 1 oder 2 auf 30 bis 250°C erwärmt werden.

4. Additionsvernetzende Siliconelastomere erhältlich nach dem Verfahren gemäß Anspruch 3.

5. Verfahren zum Verbinden einer additionsvernetzenden Siliconzusammensetzung mit einem Substrat, bei dem die additionsvernetzenden Siliconzusammensetzungen gemäß Anspruch 1 oder 2 auf das Substrat aufgebracht und anschliessend durch Erwärmen auf 30 bis 250°C vernetzt werden.

6. Verbundmaterial erhältlich nach dem Verfahren gemäß Anspruch 5.

## Claims

1. Self-adhesive addition-crosslinking silicone compositions which contain

(A) diorganopolysiloxanes of the general formula (1)

$$R^1_a R^2_b SiO_{(4-a-b)/2} \tag{1},$$

in which

R¹ is a hydroxyl radical or a monovalent, optionally halogen-substituted hydrocarbon radical optionally containing O, N, S or P atoms, having 1 to 20 carbon atoms and being free of aliphatically unsaturated groups,

R² is a monovalent, aliphatically unsaturated, optionally halogen-substituted hydrocarbon radical optionally containing 0, N, S or P atoms and having 2 to 10 carbon atoms,

b denotes values from 0.003 to 2, with the proviso that $1.5 < (a+b) < 3.0$, that on average at least two aliphatically unsaturated radicals R² are present per molecule and that the viscosity of the diorganopolysiloxanes (A), determined at 25°C, is 1 mPa.s to 40,000 Pa.s,

(B) organohydrogenpolysiloxanes of the general formula (2)

$$R^3_c R^4_d R^5_e H_f SiO_{(4-c-d-2e-f)/2} \tag{2},$$

in which

R³ is a monovalent aliphatically saturated hydrocarbon radical having 1 to 20 carbon atoms,

R⁴ is (a) an optionally halogen-substituted monovalent hydrocarbon radical having 6 to 15 carbon atoms which contains at least one aromatic $C_6$-ring, or (b) a halogen-substituted, saturated monovalent hydrocarbon radical optionally containing O, N, S or P atoms and having 2 to 20 carbon atoms,

$R^5$      is a bivalent, optionally halogen-substituted hydrocarbon radical Si-bonded at both ends, optionally containing O, N, S or P atoms and having 6 to 20 carbon atoms and

c, d, e and f      denote positive numbers, with the proviso that the organohydrogenpolysiloxane (B) contains on average 3 to less than 20 SiH groups per molecule, and that the viscosity of the organohydrogenpolysiloxane (B), determined at 25°C, is 1 mPa.s to 100 Pa.s,

(C) organosilicon compounds having epoxy groups and hydrolysable groups and of the general formula (3)

$$R^7{}_g R^8{}_h R^9{}_i SiO_{(4-g-h-i)/2} \tag{3}$$

and/or their partial hydrolysis products, in which

$R^7$      is a hydrogen radical, a hydroxyl radical or an optionally halogen- or cyano-substituted, saturated monovalent hydrocarbon radical optionally containing O, N, S or P atoms and having 1 to 20 carbon atoms,

$R^8$      is an optionally halogen-substituted monovalent hydrocarbon radical containing at least one epoxy group, optionally containing O, N, S or P atoms and having 2 to 20 carbon atoms,

$R^9$      is a hydrolysable, monovalent optionally halogen-substituted hydrocarbon radical bonded to Si via an Si-O-C-, Si-O-N- or Si-N- link, optionally containing O, N, S or P atoms and having 1 to 20 carbon atoms, with the proviso that $4 > g \geq 0$, $4 > h > 0$, $4 > i > 0$, $4 \geq (h+i) > 0$ and $4 \geq (g+h+i)$, and

(D) a hydrosilylation catalyst,
**characterized in that** the relationships: $0.05 < 100 (d+e) / (c+d+e+f) < 12$ are fulfilled in the organohydrogenpolysiloxane (B).

2. Addition-crosslinking silicone compositions according to Claim 1, in which the viscosity, measured at 25°C, of the component (B) is 2 mPa.s to 1 Pa.s.

3. Process for the preparation of addition-crosslinked silicone elastomers, in which the self-adhesive addition-crosslinking silicone compositions according to Claim 1 or 2 are heated to 30 to 250'C.

4. Addition-crosslinked silicone elastomers obtainable by the process according to Claim 3.

5. Process for bonding an addition-crosslinking silicone composition to a substrate, in which the addition-crosslinking silicone compositions according to Claim 1 or 2 are applied to the substrate and then crosslinked by heating to 30 to 250°C.

6. Composite material obtainable by the process according to Claim 5.

**Revendications**

1. Compositions de silicone auto-adhésives réticulant par addition qui contiennent

(A) des diorganopolysiloxanes de formule générale (1)

$$R^1{}_a R^2{}_b \, SiO_{(4-a-b)/2} \tag{1}$$

dans laquelle
$R^1$ représente un radical hydroxyle ou un radical hydrocarboné monovalent, le cas échéant halogéno-substitué, contenant le cas échéant des atomes de O, N, S ou P, comportant 1 à 20 atomes de carbone, qui est exempt de groupes aliphatiquement insaturés,
$R^2$ représente un radical hydrocarboné monovalent, aliphatiquement insaturé, le cas échéant halogéno-substitué, contenant le cas échéant des atomes de O, N, S ou P, comportant 2 à 10 atomes de carbone,
b représente des valeurs de 0,003 à 2,
avec la précision que $1,5<(a+b)<3,0$, qu'au moins deux radicaux $R^2$ aliphatiquement insaturés sont contenus en moyenne par molécule et que la viscosité déterminée à 25°C des diorganopolysiloxanes (A) est de 1 mPa.s à 40.000 Pa.s.
(B) des organohydrogénopolysiloxanes de formule générale (2)

$$R^3{}_c R^4{}_d R^5{}_e H_f \, SiO_{(4-c-d-2e-f)/2} \tag{2}$$

dans laquelle
$R^3$ représente un radical hydrocarboné aliphatiquement saturé, monovalent, comportant 1 à 20 atomes de carbone,
$R^4$ représente

    (a) un radical hydrocarboné monovalent, le cas échéant halogéno-substitué, comportant 6 à 15 atomes de carbone, qui contient au moins un noyau aromatique en $C_6$ ou
    (b) un radical hydrocarboné monovalent, saturé, halogéno-substitué, contenant le cas échéant des atomes de 0, N, S, ou P, comportant 2 à 20 atomes de carbone,

$R^5$ représente un radical hydrocarboné bivalent lié à Si des deux côtés, le cas échéant halogéno-substitué, contenant le cas échéant des atomes de O, N, S ou P, comportant 6 à 20 atomes de carbone et
c, d, e et f représentent des nombres positifs, avec la précision que l'organohydrogénopolysiloxane (B) contient, par molécule, en moyenne, 3 à moins de 20 groupes SiH et que la viscosité déterminée à 25°C de l'organohydrogénopolysiloxane (B) est de 1 mPa.s à 100 Pa.s,
(C) des composés organosilicium comportant des groupes époxy et des groupes hydrolysables, de formule générale (3)

$$R^7{}_g R^8{}_h R^9{}_i SiO_{(4-g-h-i)/2} \tag{3},$$

et/ou leurs hydrolysats partiels, formule dans laquelle
$R^7$ représente un radical hydrogène, hydroxyle ou un radical hydrocarboné monovalent, saturé, le cas échéant, halogéno-substitué ou cyano-substitué, contenant le cas échéant des atomes de O, N, S ou P, comportant 1 à 20 atomes de carbone,
$R^8$ représente un radical hydrocarboné monovalent contenant au moins un groupe époxy, le cas échéant halogéno-substitué, contenant le cas échéant des atomes de 0, N, S ou P, comportant 2 à 20 atomes de carbone,
$R^9$ représente un radical hydrocarboné lié par une liaison Si-O-C, Si-O-N ou Si-N à Si, monovalent, hydrolysable, le cas échéant halogéno-substitué, contenant, le cas échéant, des atomes de O, N, S ou P, comportant 1 à 20 atomes de carbone,
avec la précision que $4>g\geq0$, $4>h>0$, $4>i>0$, $4\geq(h+i)>0$ et $4\geq(g+h+i)$, et
(D) un catalyseur d'hydrosilylation,

**caractérisées en ce que**, dans le cas de l'organohydrogénopolysiloxane (B) les relations : $0,05 <100\,(d+e)/(c+d+e+f)<12$ sont satisfaites.

2. Compositions de silicone réticulant par addition selon la revendication 1, dans lesquelles la viscosité mesurée à 25°C du constituant (B) est de 2 mPa.s à 1 Pa.s.

3. Procédé pour la préparation d'élastomères de silicone réticulant par addition, dans lequel les compositions de silicone auto-adhésives réticulant par addition selon la revendication 1 ou 2 sont chauffées de 30 à 250°C.

4. Elastomères de silicone réticulant par addition pouvant être obtenus par le procédé selon la revendication 3.

5. Procédé pour l'assemblage d'une composition de silicone réticulant par addition avec un substrat, dans lequel les compositions de silicone réticulant par addition selon la revendication 1 ou 2 sont appliquées sur le substrat et ensuite réticulées par chauffage à 30 à 250°C.

6. Matériau composite pouvant être obtenu par le procédé selon la revendication 5.